# EUROPEAN PATENT APPLICATION

(11) **EP 1 528 567 A1**
(43) Date of publication of application: **04.05.2005**
(21) Application number: 04256581.2
(22) Date of filing: 26.10.2004
(51) Int. Cl.: G11B 27/10, G11B 27/32, G11B 27/34

(54) **Moving picture reproducing apparatus in which player mode information is set, reproducing method using the same, and storage medium**

(30) Priority: 30.10.2003 KR 2003076490
(71) Applicant: Samsung Electronics Co., Ltd., Suwon-si, Gyeonggi-do (KR)
(72) Inventor: Kim, Kwang-min, Dongan-gu, Anyang-si, Gyeonggi-di (KR); Jung, Kil-soo, Taean-eup, Hwaseong-si, Gyeonggi-do (KR); Park, Sung-wook, Mapo-gu, Seoul (KR); Kang, Man-seok, Suwon-si, Gyeonggi-do (KR)
(74) Representative: Robinson, Ian Michael

(57) **Abstract**

A moving picture reproducing apparatus in which player mode information is set, a reproducing method using the same, and a storage medium (501). The apparatus includes a storage area (505) in which player mode information indicating types of reproducible data is recorded; and a reproducing unit (504) selectively reproducing first type data (1), or selectively reproducing the first type data (1) and the second type data (2), according to the player mode information from a storage medium (501) including at least one type data of the first type data (1) for reproducing moving picture information (101) and the second type data (2) for providing additional functions using the moving picture information (101). Accordingly, a storage medium (501) having a function of reproducing moving picture information (101) and/or additional functions can be reproduced regardless of the type of reproducing apparatus.

## Description

The present invention relates to reproduction from a storage medium, and more particularly, to a moving picture reproducing apparatus in which player mode information indicating which data types can be reproduced by the reproducing apparatus is set, a reproducing method using the same, and a storage medium.

Moving picture data recorded in a general storage medium includes compressed and coded moving picture information and navigation information for controlling reproduction of the moving picture information.

The moving picture information includes an audio-visual stream that includes video, audio, and/or subtitles coded according to a moving picture experts group (MPEG) standard. Also, the moving picture information can include additional information, such as a coding attribute of the audio-visual stream, an entry point for random access, and a playlist, which is defined as an object determining a reproducing order.

The navigation information includes navigation commands controlling reproduction of the moving picture information, such as a command for reproducing the playlist or a command for reproducing another playlist. The navigation information is generally stored in a binary code table. Accordingly, moving picture information can be reproduced with reference to navigation information of a storage medium, and a user can view a moving picture, such as a movie having a high-definition picture quality. A set of navigation commands is called a movie object.

However, a conventional storage medium in which moving pictures are recorded cannot provide additional functions, such as a program function providing a user-interactive function and a browsing function, except the reproducing function of moving picture information.

Also, even if a storage medium does provide functions other than the reproduction of moving picture information, a conventional reproducing apparatus having only a function for reproducing moving picture information cannot reproduce the storage medium including the additional functions. Therefore, compatibility between reproducing apparatuses and storage media is low.

According to the present invention there is provided an apparatus and method as set forth in the appended claims. Preferred features of the invention will be apparent from the dependent claims, and the description which follows.

The invention provides a storage medium providing a program function and browsing function as additional functions besides reproduction of moving picture information.

The invention also provides a reproducing apparatus that can smoothly reproduce information from the storage medium regardless of whether additional functions besides a function for reproducing moving picture information are provided, that is, regardless of a kind of reproducing apparatus.

The invention also provides a reproducing method, in which a storage medium can be smoothly reproduced regardless of the type of the storage medium or reproducing apparatus.

According to an aspect of the invention, there is provided a reproducing apparatus including: a storage area in which player mode information indicating types of reproducible data is recorded; and a reproducing unit selectively reproducing first type data or first and second type data on the basis of the player mode information recorded in the storage area from a storage medium including at least one type data of the first type data for reproducing moving picture information and the second type data for providing additional functions using the moving picture information.

The player mode information can be recorded to indicate a first mode when the reproducing apparatus can only reproduce the first type data and indicate a second mode when the reproducing apparatus can reproduce the first type data and the second type data.

The storage area can store a plurality of system parameters in which reproducing information set by the reproducing apparatus is recorded. The system parameters include the player mode information, and the player mode information cannot be reset after the reproduction starts.

The reproducing apparatus can further include a reading unit that reads at least one of the first type data and the second type data from a storage medium and reads system data for controlling reproduction of the data.

The reproducing apparatus can further include a buffering unit temporarily storing the read first type data or the first type data and the second type data, and the read system data. The reproducing unit can comprise an application manager controlling reproduction of the data on the basis of the system data and a blender generating an image by overlaying images reproduced from the first and second type data.

The reproducing unit can include a presentation engine decoding and reproducing compressed and coded moving picture information included in the first type data, and a navigation engine controlling the presentation engine on the basis of navigation information. The navigation information is included in the first type data, and is used for controlling reproduction of moving picture information. In this case, the player mode information indicates the first mode.

The reproducing unit can further include a program engine executing program data, which is included in the second type data, for. providing a user-interactive function. In this case, the player mode information indicates the second mode.

The reproducing unit can further include a browser engine executing browser data, which is included in the second type data, for reproducing relevant information from a markup document storing information related to a moving picture. Again, in this case, the player mode information indicates the second mode.

The application manager can transmit to the navigation engine location information of data to be initially reproduced included in the system data. The navigation engine can control the presentation engine so that the presentation engine reproduces the data to be initially reproduced and reads the player mode information from the storage area, and control the presentation engine such that the presentation engine reproduces reproducible first type data or first type data and second type data on the basis of the player mode information.

The data to be initially reproduced can be the first type data.

The application manager can control the engines such that the data to be initially reproduced is reproduced using the presentation engine and navigation engine. The succeeding data to be reproduced can be reproduced using the presentation engine and navigation engine when the player mode information indicates the first mode and using the presentation engine, navigation engine, program engine, and browser engine when the player mode information indicates the second mode.

The storage medium can be a portable storage medium easily inserted into and taken out of the reproducing apparatus.

The storage medium can be an optical disc from which data can be read using an optical device.

According to another aspect of the invention, there is provided a storage medium storing at least one of first type data for reproducing moving picture information and second type data for providing additional functions using the moving picture information, and player control information for controlling a reproducing unit so that the reproducing unit selectively reproduces reproducible first type data or first type data and second type data according to a reproducing apparatus.

The storage medium can also store system data for controlling reproduction of the first type data or the first type data and second type data.

The system data can include location information of data to be initially reproduced.

The data to be initially reproduced can be the first type data.

The data to be initially reproduced can include the player control information. The player control information is for controlling a reproducing apparatus so that player mode information is read from a storage area of the reproducing apparatus. When the read player mode information indicates a first mode, the first type data is reproduced, and when the read player mode information indicates a second mode, the first type data and the second type data are reproduced.

The first type data can include moving picture information, which is compressed and encoded, and navigation information for controlling reproduction of the moving picture information.

The second type data can include program data for providing a user-interactive function.

The second type data can further include browser data for reproducing relevant information from a markup document storing information related to moving pictures.

According to another aspect of the invention, there is provided a reproducing method including reading player mode information indicating types of reproducible data, and selectively reproducing first type data or first type data and second type data on the basis of the player mode information read from a storage medium. The player mode information includes at least one of the first type data for reproducing moving picture information and the second type data for providing additional functions using the moving picture information.

The player mode information can be read from a storage area of a reproducing apparatus. When a type of data that can be reproduced by the reproducing apparatus is the first type, the player mode information can be recorded to indicate a first mode, and when the type of data that can be reproduced by the reproducing apparatus is the first type and the second type, the player mode information can be recorded to indicate a second mode.

When the read player mode information indicates the first mode, the first type data is reproduced, and when the read player mode information indicates the second mode, the first type data and the second type data are reproduced. The reproduced images can be overlaid as a single image, and then the single image can be displayed on a screen.

According to an aspect of the invention, a first type data for reproducing a moving picture or the first type data and second type data for providing additional functions using the moving picture information is recorded in a storage medium. In particular, the storage medium includes player control information, that controls a reproducing apparatus so that the reproducing apparatus reproduces first type data when the reproducing apparatus is a first mode reproducing apparatus, and first type data and second type data when the reproducing apparatus is a second mode reproducing apparatus, according to player mode information indicating types of reproducible data. The player mode information is included in a predetermined storage area of the reproducing apparatus.

Also, a reproducing apparatus according to an aspect of the invention includes a predetermined storage area storing player mode information indicating data, that can be reproduced by the reproducing apparatus, as first type data and second type data; and a reproducing unit reproducing the first type data when the player mode information indicates a first mode and the first type data and the second type data when the player mode information indicates a second mode.

Accordingly, a storage medium providing a function for reproducing moving picture information and/or additional functions can be reproduced regardless of a type of reproducing apparatus used.

Additional aspects and/or advantages of the invention will be set forth in part in the description which follows and, in part, will be obvious from the description, or may be learned by practice of the invention.

The above and/or other features and advantages of the present invention will become more apparent by describing in detail exemplary embodiments thereof with reference to the attached drawings in which:
Figure 1 illustrates first type data recorded in a storage medium according to an embodiment of the invention;
Figure 2 illustrates first type data and second type data recorded in a storage medium according to an embodiment of the invention;
Figure 3 illustrates system data of the first type data shown in Figure 1;
Figure 4 illustrates system data of the first type data and second type data shown in Figure 2;
Figure 5 is a block diagram of a reproducing apparatus according to an embodiment of the invention;
Figure 6 is a detailed block diagram of a reproducing apparatus that can reproduce first type data;
Figure 7 is a detailed block diagram of a reproducing apparatus that can reproduce first type and second type data;
Figure 8 is a table showing system parameters stored in a system register of the reproducing apparatus of Figure 5;
Figure 9 illustrates player mode information in the system parameters of Figure 8;
Figure 10 is illustrates player control information recorded in a storage medium according to an embodiment of the invention;
Figure 11 is a view illustrating a reproducing method according to an embodiment of the invention; and
Figure 12 is a flowchart illustrating the reproducing method according to an embodiment of the invention.

Reference will now be made in detail to the embodiments of the present invention, examples of which are illustrated in the accompanying drawings, wherein like reference numerals refer to the like elements throughout. The embodiments are described below to explain the present invention by referring to the figures.

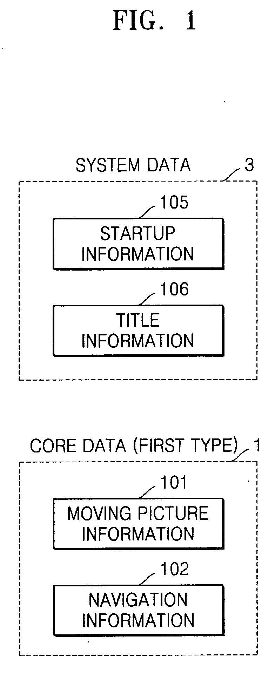

Figure 1 illustrates first type data recorded in a storage medium according to an aspect of the invention. Referring to Figure 1, a storage medium stores core data 1 and system data 3. The core data 1 is used for reproducing a moving picture (the core data is also called "first type data"). Each core data 1 is realized as an object. The core data 1 includes compressed and coded moving picture information 101 and navigation information 102 for controlling reproduction of the moving picture information 101. A set of the navigation commands is called a movie object. The moving picture information 101 can be reproduced with reference to the navigation information 102 stored in the storage medium, and a user can view a moving picture such as a movie having high-definition picture quality.

The system data 3 controls reproduction of the core data 1. The system data 3 includes at least startup information 105 and title information 106. The startup information 105 indicates a location of an object to be initially reproduced when the storage medium is reproduced by a reproducing apparatus. The title information 106 includes entry point information indicating a location of each object to be reproduced.

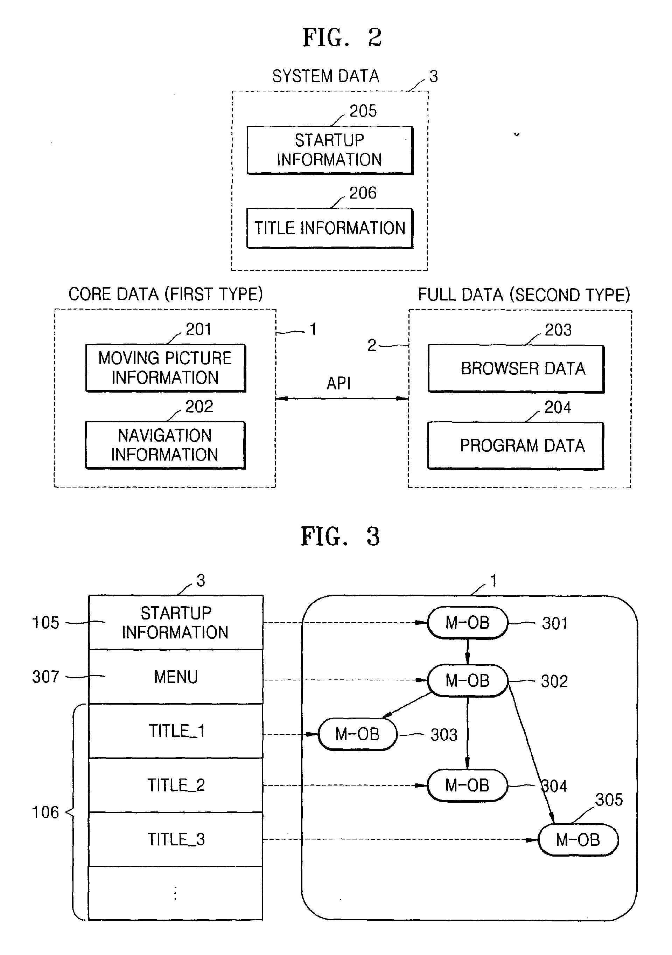

Figure 2 illustrates first type data and second type data recorded in a storage medium according to an aspect of the invention. Referring to Figure 2, a storage medium stores core data 1, full data 2, and system data 3. The core data 1 is in Figure 1. The full data 2 provides additional functions besides the reproduction of a moving picture (the full data is also called "second type data"). The full data 2 may include browser data 203 for reproducing relevant information from a markup document storing information related to a moving picture, and/or program data 204 providing a user-interactive function.

The browser data 203 may include at least one object having commands for reproducing relevant information from a markup document storing information related to a moving picture. The commands may be realized with a markup language and/or an executing script language (for example, an ECMA script). Accordingly, relevant information may be reproduced from a markup document storing information related to moving pictures when the moving pictures are reproduced. For example, with respect to a movie recorded in the storage medium, relevant information, such as latest news related to actors/actresses stored in webpages or other files, news related to the movie, and updated subtitles, can be reproduced with the movie.

The program data 204 may include at least one object providing a function, such as a game function using a moving picture, a function for reproducing a director's commentary while reproducing a portion of the moving picture, a function for displaying additional information while reproducing a portion of the moving picture, or a function for chatting during reproducing a portion of the moving picture. In the program data 204, to execute a program with a moving picture, an application program interface (API) of a presentation engine for reproducing moving picture information, which will be described later, may be included. The full data 2 can also include another data type for providing another additional function besides production of a moving picture.

The system data 3 is used to control reproduction of the core data 1 and full data 2. The system data 3 includes startup information 205 and title information 206. The startup information 205 and title information 206 are not discussed here in detail because they are the same as discussed above in Figure 1.

Accordingly, a storage medium in which the first type and second type data are recorded may provide various additional functions using a moving picture besides reproduction of the moving picture.

Figure 3 illustrates the system data 3 of the first type data shown in Figure 1. Referring to Figure 3, the system data 3 includes the startup information 105 and the title information 106. The system data 3 may further include menu information 307 for displaying a menu on a screen. The startup information 105 indicates a location of an object to be initially reproduced when a storage medium is reproduced by a reproducing apparatus. In Figure 3, the startup information 105 points at a movie object (M-OB) 301 included in the core data 1. Accordingly, when the storage medium is inserted in the reproducing apparatus, the movie object (M-OB) 301 is initially reproduced. The startup information 105 is not limited to being directed to the movie object 301.

The title information 106 includes control information (title_1, title_2, title_3, ...) for reproducing at least one of movie objects (M-OB) 303, 304, 305, .... The title information 106 of the storage medium in which first type core data 1 is recorded indicates a movie object having navigation commands for reproducing a moving picture. The title information 106 includes entry point information indicating a location of each object to be reproduced.

The movie objects 303 through 305 include of a plurality of navigation commands for reproducing moving pictures and may be binary tabulated. Each object has an identification number, and the identification number is identical to the entry point information indicated by the title information 106.

Also, a second movie object 303 through 305 can be reproduced when connected to a first movie object 303 through 305 that indicates a location of the second movie object 303 through 305. For example, the movie object (M-OB) 302 and also the movie objects (M-OBs) 303 through 305 can be reproduced when indicated by the movie object (M-OB) 301.

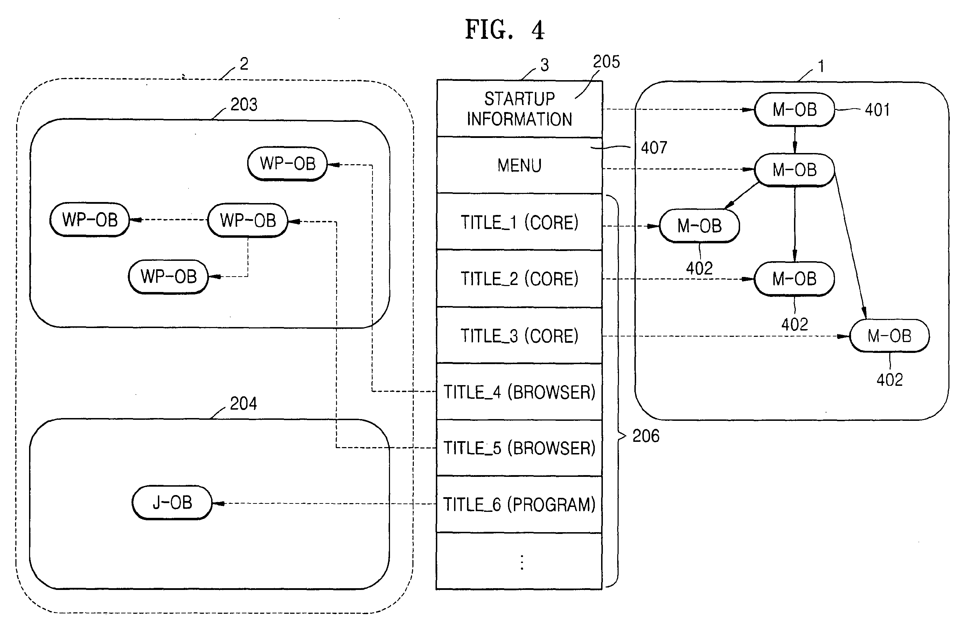

Figure 4 illustrates the system data 3 of the first type data and second type data shown in Figure 2. Referring to Figure 4, the system data 3 is used to control reproduction of the core data 1 and full data 2. The system data 3 includes the startup information 205 and the title information 206. The system data 3 may further include menu information 407 for displaying a menu on a screen.

The startup information 205 indicates a location of an object to be initially reproduced when a storage medium is reproduced by a reproducing apparatus. In Figure 4, the startup information 205 points at a movie object (M-OB) 401 included in the core data 1. Accordingly, when the storage medium is inserted in the reproducing apparatus, the movie object (M-OB) 401 is initially reproduced. It is understood that the startup information 205 can be directed to any movie object 401 included in the core data 1.

The title information 206 includes entry point information indicating a location of each object to be reproduced. The title information 206 includes control information (title_1, title_2, title_3, ...) for reproducing at least one object. The objects indicated by the title information 206 may be classified into at least a first type core mode object 402 (hereinafter, a movie object), a second type program mode object 204 (hereinafter, a program object), and/or a browser mode object 203 (hereinafter, a webpage object).

The movie objects 401 and 402 include a plurality of navigation commands for reproducing moving pictures and may be binary tabulated. Each movie object 401 and 402 has an identification number, and the identification number is identical to the entry point information indicated by the title information 206. The webpage object 203 includes a markup language script and/or an execution script, and a file name of a relevant markup document can be the entry point information. The program object 204 includes programs for providing a user-interactive function, and a file name of a relevant program can be the entry point information.

A second object can be reproduced when connected to a first object that indicates a location of the second object.

As described above, the storage media may store core data for reproducing a moving picture and may further store program data and/or browser data as full data to provide additional functions using the moving picture. In particular, the storage medium storing the full data may provide various additional functions, such as a game using a moving picture, on-line chatting, displaying of information related to a webpage, etc.

A storage medium may be a portable storage medium that is easily inserted into and taken out of a reproducing apparatus and/or may be an optical disc from which data may be read using an optical device of the reproducing apparatus. For example, an optical disc, such as CD-ROM, a DVD, or a Blu-ray Disc, can be included in the storage medium, and an optical disc that will be developed later can also be included in the storage medium.

Hereinafter, a reproducing apparatus for reproducing from the storage medium described above will be described.

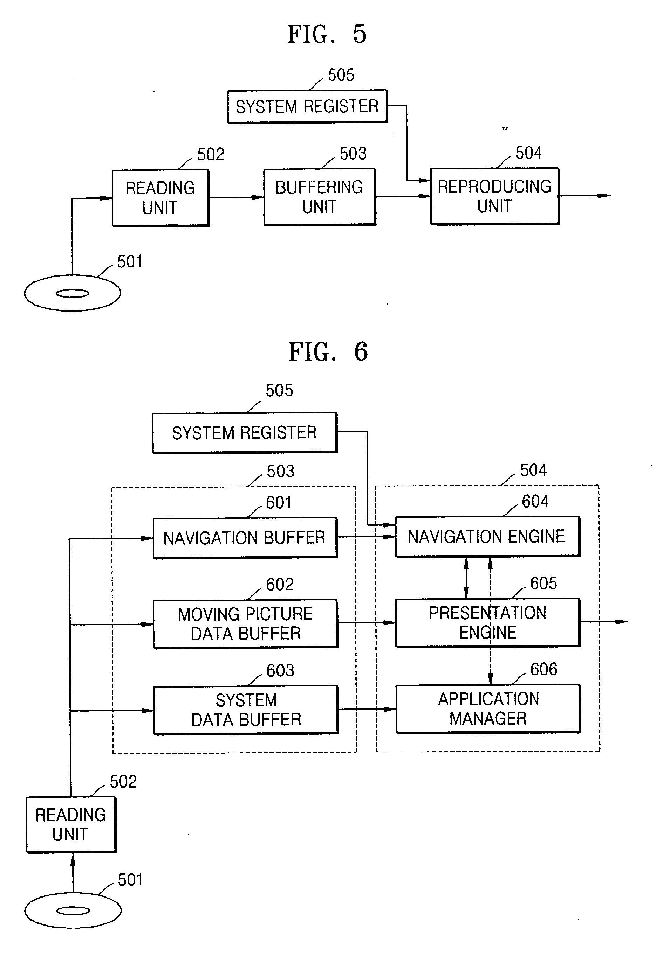

Figure 5 is a block diagram of a reproducing apparatus according to an aspect of the invention. Referring to Figure 5, the reproducing apparatus includes a reading unit 502, a buffering unit 503, a reproducing unit 504, and a system register 505 as a predetermined storage area.

The reading unit 502 reads data to be reproduced from a storage medium 501 as described above. For example, if the storage medium 501 is an optical disc, the reproducing apparatus includes an optical device that reads data recorded on the optical disc. The reading unit 502 reads first type core data or the first and the second type full data according to a type of the storage medium 501.

The buffering unit 503 temporarily stores the data read from the reading unit 502 and transmits the data to the reproducing unit 504. The reproducing unit 504 reproduces an object using a reproducing engine using a special reproducing function according to a data type on the basis of player mode information recorded in the system register 505. The reproduced object is displayed using a display apparatus (not shown). The system register 505 is a predetermined storage area in which the player mode information indicating types of data that can be reproduced by the reproducing apparatus is stored. The system register 505 will be described in detail later.

Figure 6 is a detailed block diagram of a reproducing apparatus that can reproduce first type data (a first mode reproducing apparatus). Referring to Figure 6, the buffering unit 503 temporarily stores data in a navigation data buffer 601, a moving picture data buffer 602, and a system data buffer 603 according to the types of data. The temporarily stored data is transmitted to a relevant reproducing engine according to player mode information of the system register 505.

The reproducing unit 504 includes at least reproducing engines 604 and 605 and an application manager 606. The reproducing engines 604 and 605 include a navigation engine 604 and a presentation engine 605. The navigation engine 604 receives navigation data from the navigation data buffer 601 and controls reproduction of moving picture stream data. The presentation engine 605 may be controlled to reproduce moving picture information using an API function having commands for reproducing a moving picture. The presentation engine 605 receives the moving picture stream data from the moving picture data buffer 602 and decodes and reproduces a compressed and coded moving picture.

The system register 505 includes player mode information indicating types of data that can be reproduced by the reproducing apparatus. Since the reproducing apparatus shown in Figure 6 can reproduce only core data for reproducing moving picture information (first type data), a first mode is recorded in the player mode information.

The navigation engine 604 reproduces an object to be initially reproduced and reads the player mode information from the system register 505. When the player mode information indicates the first mode, the navigation engine 604 reproduces a succeeding first type object through the navigation engine 604 and presentation engine 605.

The application manager 606 receives the system data 3 from the system data buffer 603 and controls the reproducing engines 604 and 605 to reproduce the moving picture information. That is, the application manager 606 seeks and reproduces an object that must be initially reproduced using the startup information 105 of the system data 3 when information stored in the storage medium is reproduced. Also, the application manager 606 seeks a location of an object to be reproduced with reference to the title information 106 of the system data 3 and reproduces the object to be reproduced.

Accordingly, even when a reproducing apparatus can reproduce only the first type data supporting only reproduction of a moving picture without an engine that can reproduce second type data providing additional functions, as shown in Figure 6, the reproducing apparatus can smoothly reproduce only the first type data by setting the player mode information of the system register 505 as the first mode, even when a storage medium storing both first type and second type data is inserted. For example, even when a storage medium having additional functions is inserted into the reproducing apparatus, a moving picture can be smoothly reproduced without an error by reproducing only the information that the reproducing apparatus can support.

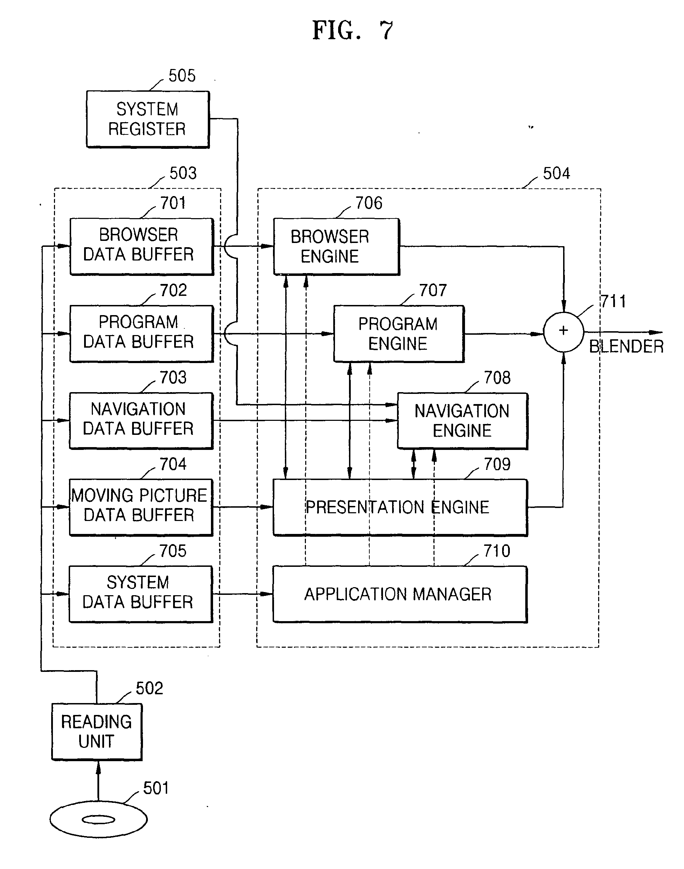

Figure 7 is a detailed block diagram of a reproducing apparatus that can reproduce first type and second type data (a second mode reproducing apparatus). Referring to Figure 7, the buffering unit 503 temporarily stores data in a browser data buffer 701, a program data buffer 702, a navigation data buffer 703, a moving picture data buffer 704, and a system data buffer 705 according to the type of data. The temporarily stored data is transmitted to a relevant reproducing engine according to player mode information of the system register 505.

The reproducing unit 504 includes reproducing engines 706 through 709, an application manager 710 and a blender 711.

The reproducing engines 706 through 709 perform respective reproducing functions according to the type of the temporarily stored data. In detail, the reproducing engines 706 through 709 include at least a browser engine 706, a program engine 707, a navigation engine 708, and/or a presentation engine 709.

The browser engine 706 receives browser data 203 from the browser data buffer 701 and reproduces information related to moving picture information from a markup document. That is, the browser engine 706 executes a browsing command having a markup language script or an execution script included in the browser data 203.

The program engine 707 receives the program data 204 from the program data buffer 702 and provides a user-interactive function. That is, the program engine 707 executes a special program realizing a special function, such as a game, chatting, or a director's commentary. Accordingly, interactive actions with the user using a moving picture can be performed. Here, the browser engine 706 or the program engine 707 can provide additional functions for a moving picture by using API functions for the presentation engine 709.

The navigation engine 708 receives the navigation data 202 from the navigation data buffer 703 and controls reproduction of moving picture stream data. The navigation engine 708 can also control reproduction of moving picture information by the presentation engine 709 using an API function that includes commands for reproducing a moving picture.

The presentation engine 709 receives the moving picture stream data 201 from the moving picture data buffer 704 and decodes and reproduces the compressed and coded moving picture.

The application manager 710 receives the system data 3 from the system data buffer 705 and controls the reproducing engines 706 through 709 when reproducing the moving picture information and providing the additional functions. That is, the application manager 710 seeks and reproduces an object that must be initially reproduced using the startup information 205 of the system data 3 when a storage medium is reproduced. Also, the application manager 710 seeks a location of an object to be reproduced with reference to the title information 206 of the system data 3 and reproduces the object using a relevant reproducing engine according to a data type.

The system register 505 is a predetermined storage area in which player mode information indicating types of data that can be reproduced by the reproducing apparatus is recorded. Since the reproducing apparatus shown in Figure 7 can reproduce both core data for reproducing moving picture information (fist type data) and full data (first type data and second type data), a second mode is recorded in the player mode information. A configuration of the system register 505 will be described in detail later.

The navigation engine 708 reproduces an object to be initially reproduced and reads the player mode information from the system register 505. When the player mode information indicates the second mode, the navigation engine 708 reproduces a succeeding first type object using the navigation engine 708 and the presentation engine 709 and reproduces a succeeding second type object using the browser engine 706 and the program engine 707.

The blender 711 outputs a single image by overlaying graphic pictures reproduced by the reproducing engines, i.e., the browser engine 706, the program engine 707, the navigation engine 708, and/or the presentation engine 709.

Accordingly, additional functions, such as a browsing function and a program function, can be realized when simultaneously reproducing a moving picture. That is, in the reproducing apparatus in which the system register 505 stores information indicating the second mode, first type moving picture data is decoded by the navigation engine 708 and the presentation engine 709, program data and/or browser data providing second type additional functions are decoded by the browser engine 706 and the program engine 707, and the decoded data is overlaid and displayed on a single screen by the blender 711. For example, when pictures including a cast profile are overlaid and reproduced or advertising pictures for a cell-phone used in the movie are overlaid when the first type moving picture data called "The Matrix" is reproduced, the moving picture and the additional functions can be simultaneously provided.

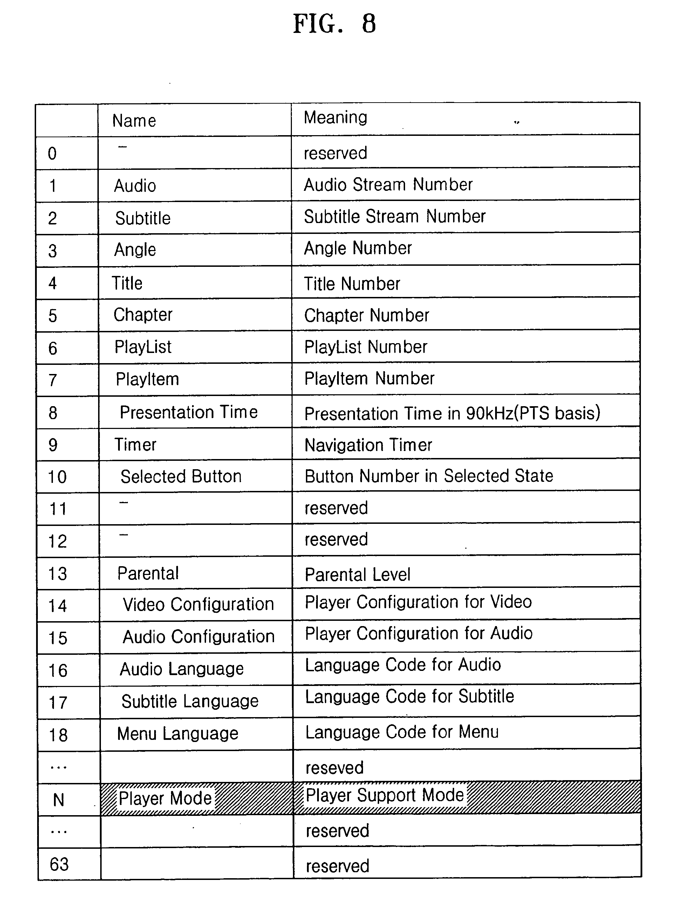

Figure 8 is a table showing system parameters stored in the system register 505 of the reproducing apparatus of Figure 5. Referring to Figure 8, the system register 505 is a predetermined storage area storing a plurality of parameters for recording information related to reproduction set by the reproducing apparatus. In Figure 8, 64 system parameters numbered 0 through 63 are shown. Each system parameter has a fixed length of 32 bits and has a positive integer value. In the system parameters, various control information related to reproduction of a moving picture supported by the reproducing apparatus, such as an audio stream number, a playlist number, a navigation timer, menu language information, and subtitle language information, is recorded. Also, there are a plurality of reserved areas. In particular, the system parameter numbers 11 and 12 as shown, cannot be reset after reproduction starts.

The system register 505 stores player mode information indicating types of data that can be reproduced by the reproducing apparatus. The player mode information is recorded in an Nth area among the reserved areas. The player mode information indicates the first mode when the reproducing apparatus supports only reproduction of the first type data and indicates the second mode when the reproducing apparatus supports reproduction of both the first type and second type data. That is, when the player mode information of the system register 505 is read, a data type that can be reproduced by the reproducing apparatus can be determined. In particular, the player mode information can be recorded in either the number 11 or 12 area, as shown, so that the player mode information cannot be reset.

The number of system parameters, a length of each parameter, and an order of the parameters stored in the system register 505 shown in Figure 8 are only one embodiment of the invention and various changes in form and details can be made without departing from the scope of the invention.

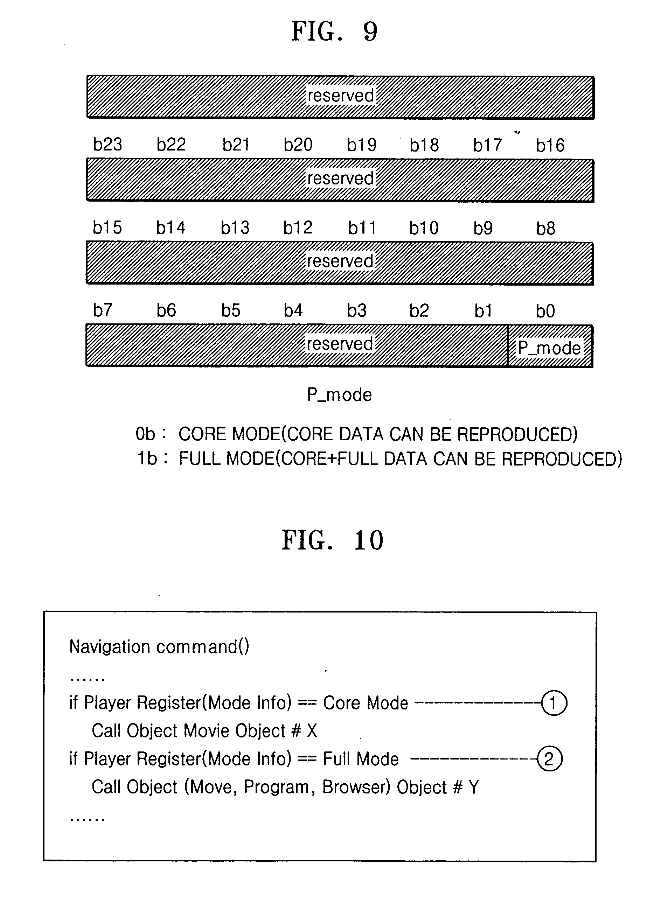

Figure 9 illustrates the structure of a system parameter stored in the system register 505 of the reproducing apparatus of Figure 5. Referring to Figure 9, player mode information is stored in a register having a 32-bit fixed length, and the least significant bit (LSB) b0 (P-mode) of the player mode information is recorded as 0 or 1. The value 0 indicates that a reproducing apparatus is a first mode reproducing apparatus, and the reproducing apparatus can reproduce only first type moving picture information. The value 1 indicates that a reproducing apparatus is a second mode reproducing apparatus, and the reproducing apparatus can reproduce first type moving picture information and provide additional functions using a second type moving picture. A bit arrangement and the number of bits of the player mode information shown in Figure 9 are just one embodiment and various changes in form and details can be made without departing from the scope of the invention.

To increase compatibility between a storage medium and a reproducing apparatus, data to be initially reproduced can be the first type core data that can be reproduced in any kind of reproducing apparatus. Succeeding data can be selectively reproduced according to the player mode information. When the player mode information indicates the first mode, the data is reproduced using a presentation engine and navigation engine, and when the player mode information indicates the second mode, first type data is reproduced using the presentation engine and navigation engine and second type data is reproduced using a browser engine and a program engine.

Figure 10 illustrates player control information recorded in a storage medium according to an aspect of the invention. Referring to Figure 10, player control information, with which any kind of reproducing apparatus can smoothly reproduce information stored in a storage medium including first type data or first type and second type data using system data 3, is shown.

In a navigation command of Figure 10, player mode information (mode info) stored in a system register of a reproducing apparatus is read, and when the value of the player mode information is 0 (a core mode or a first mode), a first type movie object is called. When the value of the player mode information is 1 (a full mode or a second mode), the first type movie object and a second type program and/or a browser object are called. The designations relating to each of the player mode information types may be switched.

The navigation command is included as a portion of a movie object to be initially reproduced (the first type core data) indicated by startup information 105 or 205 of the system register 3. The object to be initially reproduced can be the first type movie object. Since both a first mode reproducing apparatus and a second mode reproducing apparatus can reproduce the first type movie object, when the object to be initially reproduced is the first type movie object, compatibility between a storage medium and a reproducing apparatus increases. That is, with reference to the player mode information, data can be smoothly reproduced regardless of the kind of data recorded in a storage medium and of the kind of data supported by a reproducing apparatus.

A method of reproducing moving picture data including mode information according to an aspect of the invention will be described on the basis of the configuration described above.

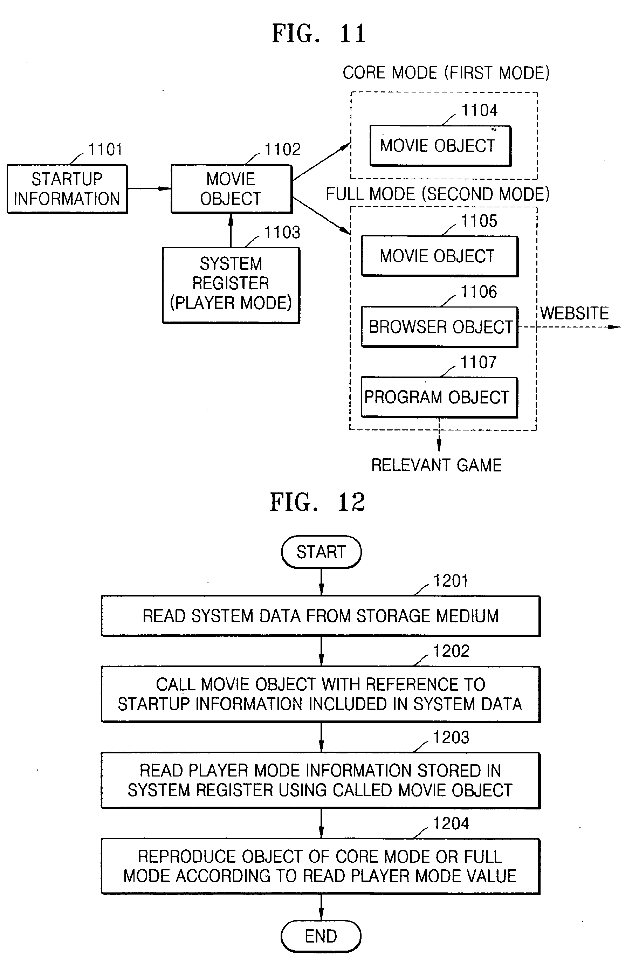

Figure 11 is a block diagram for illustrating a reproducing method according to an aspect of the invention. Referring to Figure 11, a movie object 1102 to be initially reproduced is reproduced based on startup information 1101 included in system data 3, and player mode information of a system register 1103 of a reproducing apparatus is read to determine a succeeding object to be reproduced. For example, if the player mode information indicates a first mode, a movie object (first type data) is reproduced using a presentation engine and navigation engine, and when the player mode information indicates a second mode, a movie object (first type data) is reproduced using the presentation engine and navigation engine, and, simultaneously, a browser object and/or program object (second type data) are reproduced using a browser engine and/or program engine. A single image is obtained from the reproduced graphics using a blender and output via a display unit (not shown).

Figure 12 is a flowchart illustrating the reproducing method according to an aspect of the invention. Referring to Figure 12, to smoothly reproduce a moving picture regardless of a kind of storage medium or reproduce apparatus, system data is read from the storage medium in operation 1201, and a first type movie object to be initially reproduced is called with reference to startup information 105 or 205 included in the system data in operation 1202. To reproduce succeeding data, according to a navigation command (player control information) included in the called movie object, player mode information is read from a system register of a reproducing apparatus in operation 1203, and according to the read player mode information, when the player mode information indicates a first mode, core mode data (first type data) is reproduced, and when the player mode information indicates a second mode, full mode data (first type data and second type data) are reproduced in operation 1204.

The invention can also be embodied as computer readable code on a computer readable recording medium. The computer readable recording medium is any data storage device that can store data that can be thereafter read by a computer system. Examples of the computer readable recording medium include read-only memory (ROM), random-access memory (RAM), CD-ROMs, magnetic tapes, floppy disks, optical disks, and carrier waves (such as data transmission through the Internet). The computer readable recording medium can also be distributed over network coupled computer systems so that the computer readable code is stored and executed in a distributed fashion.

As described above, according to aspects of the invention, a storage medium can provide additional functions, such as a program function for providing a user-interactive function and a browsing function for reproducing relevant information from a markup document, besides reproduction of moving picture information.

Also, information in the storage medium can be smoothly reproduced using a reproducing apparatus regardless of whether the storage medium includes only first type data for reproduction of moving picture information or further includes second type data, providing additional functions, and furthermore, regardless of whether the reproducing apparatus can reproduce both the first type data and second type data.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A reproducing apparatus comprising:
a storage area (505) in which player mode information indicating a plurality of types of reproducible data is recorded; and
a reproducing unit (504) that selectively reproduces a first type data (1), or the first type data (1) and a second type data (2), according to the recorded player mode information;
wherein the first type data (1) provides reproducing moving picture information (101) and the second type data (2) provides additional functions using the moving picture information (101).

2. The reproducing apparatus as claimed in claim 1, wherein the player mode information indicates a first mode when the reproducing apparatus is only able to reproduce the first type data (1) and indicates a second mode when the reproducing apparatus is able to reproduce the first type data (1) and the second type data (2).

3. The reproducing apparatus as claimed in claim 2, wherein the storage area (505) stores a plurality of system parameters comprising the player mode information, each of the system parameters having reproduction information recorded therein that is set by the reproducing apparatus.

4. The reproducing apparatus as claimed in claim 3, wherein the player mode information cannot be reset after reproduction starts.

5. The reproducing apparatus as claimed in any preceding claim, further comprising:
a reading unit (502) reading at least one of the first type data (1) and the second type data (2) from the storage medium (501) and reading system data (3) for controlling reproduction of the at least one of the first type data (1) and the second type data (2).

6. The reproducing apparatus as claimed in claim 5, further comprising:
a buffering unit (503) storing the read first type data (1), or the read first type data (1) and the read second type data (2), and the read system data (3), and
an application manager (710) of the reproducing unit (504) for controlling reproduction of the data according to the system data (3).

7. The reproducing apparatus as claimed in claim 6, wherein the reproducing unit (504) further comprises:
a blender (711) generating an image by overlaying images reproduced from the first type data (1) and the second type data (2).

8. The reproducing apparatus as claimed in any preceding claim, wherein the reproducing unit (504) comprises:
a presentation engine (709) decoding and reproducing compressed and coded moving picture information (101) included in the first type data (1); and
a navigation engine (708) controlling the presentation engine (709) according to navigation information (102) included in the first type data (1) for controlling the reproduction of moving picture information (101),
wherein the player mode information indicates a first mode.

9. The reproducing apparatus as claimed in claim 8, wherein the reproducing unit (504) further comprises:
a program engine (707) executing program data (204), which is included in the second type data (2), for providing a user-interactive function,
wherein the player mode information indicates a second mode.

10. The reproducing apparatus as claimed in claim 8 or 9, wherein the reproducing unit (504) further comprises:
a browser engine (706) executing browser data (203), which is included in the second type data (2), for reproducing information from a markup document storing information related to the moving picture information (101),
wherein the player mode information indicates a second mode.

11. The reproducing apparatus as claimed in any of claims 6 to 10, wherein the application manager (710) transmits location information (105) of data to be initially reproduced, which is included in the system data (3), to a navigation engine (708) , and
the navigation engine (708) controls a presentation engine (709) such that the presentation engine (709) reproduces the data to be initially reproduced and reads the player mode information from the storage area (505), and the presentation engine (709) reproduces first type data (1), or reproduces first type data (1) and second type data (2), according to the player mode information.

12. The reproducing apparatus as claimed in claim 11, wherein the data to be initially reproduced is the first type data (1).

13. The reproducing apparatus as claimed in claim 12, wherein the application manager (710) controls the engines such that the data to be initially reproduced is reproduced using the presentation engine (709) and the navigation engine (708), and the succeeding data to be reproduced is reproduced using the presentation engine (709) and the navigation engine (708) when the player mode information indicates the first mode, and the succeeding data to be reproduced is reproduced using the presentation engine (709), the navigation engine (708), the program engine (707) and the browser engine (706) when the player mode information indicates the second mode.

14. The reproducing apparatus as claimed in any preceding claim, wherein the storage medium (501) is a portable storage medium (501) insertable with the reproducing apparatus.

15. The reproducing apparatus as claimed in claim 14, wherein the storage medium (501) is an optical disc and data recorded on the optical disc is read using an optical device.

16. A storage medium storing:
at least one of first type data (1) to reproduce moving picture information (101) or second type data (2) to provide additional functions using the moving picture information (101); and
player control information to control a reproducing unit (504) such that the reproducing unit (504) selectively reproduces the first type data (1), or reproduces the first type data (1) and the second type data (2), according to a reproducing apparatus.

17. The storage medium as claimed in claim 16, further storing:
system data (3) that controls reproduction of the first type data (1), or the first type data (1) and the second type data (2).

18. The storage medium as claimed in claim 17, wherein the system data (3) comprises:
location information (105) of data to be initially reproduced.

19. The storage medium as claimed in claim 18, wherein the data to be initially reproduced is the first type data (1).

20. The storage medium as claimed in claim 19, wherein the data to be initially reproduced comprises:
player control information to control a reproducing apparatus such that player mode information is read from a storage area (505) of the reproducing apparatus,
wherein when the read player mode information indicates a first mode, the first type data (1) is reproduced, and when the read player mode information indicates a second mode, the first type data (1) and the second type data (2) are reproduced.

21. The storage medium as claimed in any of claims 16 to 20, wherein the first type data (1) comprises:
moving picture information (101) that is compressed and encoded; and
navigation information (102) to control reproduction of the moving picture information (101).

22. The storage medium as claimed in any of claims 16 to 21, wherein the second type data (2) comprises:
program data (204) to provide a user-interactive function.

23. The storage medium as claimed in claim 22, wherein the program data (204) provides at least one of a function for displaying text when reproducing a portion of the moving picture, a function for displaying relevant information when reproducing a portion of the moving picture, and a function for communicating when reproducing a portion of the moving picture.

24. The storage medium as claimed in claim 23, wherein the program data (204) comprises:
an application program interface function to reproduce the moving picture information (101).

25. The storage medium as claimed in any of claims 16 to 24, wherein the second type data (2) further comprises:
browser data (203) to reproduce information from a markup document storing information related to moving pictures.

26. The storage medium as claimed in claim 25, wherein the browser data (203) comprises:
at least one command represented as a markup language script to reproduce the information from the markup document and/or an execution script.

27. The storage medium as claimed in any of claims 16 to 26, wherein the storage medium (501) is a portable storage medium insertable with the reproducing apparatus.

28. The storage medium as claimed in claim 27, wherein the storage medium (501) is an optical disc from which data is read using an optical device of the reproducing apparatus.

29. A reproducing method comprising:
reading player mode information indicating types of reproducible data; and
selectively reproducing a first type data (1), or the first type data (1) and a second type data (2), according to the read player mode information, wherein the first type data (1) provides reproducing moving picture information (101) and the second type data (2) provides additional functions using the moving picture information (101).

30. The reproducing method as claimed in claim 29, wherein the reading the player mode information comprises:
reading the player mode information from a storage area (505) of a reproducing apparatus,
wherein when a type of reproducible data is the first type data (1), the player mode information indicates a first mode, and when the type of reproducible data is the first type data (1) and the second type data (2), the player mode information indicates a second mode.

31. The reproducing method as claimed in claim 29, wherein the selectively reproducing first type data (1), or selectively reproducing the first type data (1) and the second type data (2), comprises:
reproducing the first type data (1) when the read player mode information indicates the first mode;
reproducing the first type data (1) and the second type data (2) when the read player mode information indicates the second mode;
overlaying the reproduced images as a single image; and
displaying the single image.

32. A storage medium, comprising:
system data (3) that controls reproduction of movie data objects, or the movie data objects and at least one second type of data object,
wherein the movie data objects are controlled and provided independent of the at least one second type of data object.

33. The medium as claimed in claim 32, wherein the system data (3) comprises:
startup information (205) indicating locations of data objects to be initially reproduced and title information (206) that includes entry point information for each of the movie data object and the at least one second type of data object to be reproduced.

34. The medium as claimed in claim 32, further comprising:
player control information to control a reproducing unit (504) such to selectively reproduce the movie data objects, or the movie data objects and the at least one second type of data object, according to a functional capability of the reproducing unit (504).

35. The medium as claimed in claim 34, wherein the at least one second type of data object comprises at least one browser data object to reproduce relevant information from a markup document and/or at least one program data object for providing a user-interactive function.

36. The storage medium as claimed in claim 35, wherein the at least one program data object includes an application program interface function to reproduce the moving picture information (101).

37. The storage medium as claimed in any of claims 32 to 35, wherein the storage medium (501) is an optical disc from which data is read using an optical device of a reproducing apparatus.

38. The storage medium as claimed in any of claims 32 to 36, wherein the movie data objects include a plurality of navigation commands for reproducing moving pictures.

39. The storage medium as claimed in claim 38, wherein each of the movie data objects has an identification number, and the identification number for each of the movie data objects is identical to entry point information indicated by the respective title information (206).

40. A reproducing apparatus to read and reproduce data from a medium that stores at least one of a plurality of data types, the apparatus comprising:
a storage unit having a plurality of storage areas (505) each relating to one of the plurality of data types, which stores the at least one of the plurality of data types read from the medium in a corresponding data type storage area (505);
a reproducing unit (504) having a plurality of engines to selectively control reproduction of data, each of the engines corresponding with one of the plurality of data type storage areas (505);
wherein the at least one of a plurality of data types includes moving data, or moving data and at least one second type of data providing an additional function.

41. The reproducing apparatus as claimed in claim 40, further comprising:
a blender (711) that receives data from the plurality of engines and outputs a single image by overlaying image data reproduced by the engines.

42. The reproducing apparatus as claimed in claim 40, further comprising:
a system register that stores player mode information indicating the data type that is reproducible by the reproducing apparatus,
wherein the at least one of the plurality of data type read from the medium and stored in the storage unit is transmitted to a corresponding engine according to the player mode information.

43. The reproducing apparatus as claimed in claim 42, wherein the reproducing unit (504) includes at least a navigation engine (708) to control reproduction of a moving picture stream data, a presentation engine (709) to decode and reproduce a compressed and coded moving picture, and an application manager (710) to control the navigation engine (708) and the presentation engine (709) to reproduce the moving picture information (101).

44. The reproducing apparatus as claimed in claim 43, wherein the navigation engine (708) reproduces an object to be initially reproduced and reads the player mode information from the system register such that when the player mode information indicates a first mode, the navigation engine (708) reproduces a succeeding first type data (1) through the navigation engine (708) and presentation engine (709), and when the player mode information indicates a second mode, the navigation engine (708) reproduces a succeeding second type data (2) using a browser engine (706) and the program engine (707).

45. The reproducing apparatus as claimed in claim 44, wherein the reproducing apparatus reproduces from the medium only the data type that the reproducing apparatus can support, such that when the reproducing apparatus can reproduce only the first type data (1) supporting only reproduction of the moving picture information (101) and does not have an engine that can reproduce the second type data (2) by setting the player mode information of the system register as the first mode even when the medium includes both first type and second type data (2).

46. The reproducing apparatus as claimed in claim 44 or 45, wherein the application manager (710) receives system data (3) from the storage unit and controls at least the navigation engine (708) and the presentation engine (709) to reproduce the moving picture information (101).

47. The reproducing apparatus as claimed in claim 44, 45 or 46, wherein the engines function simultaneously to reproduce the moving picture information (101) such that first type data (1) is decoded by the navigation engine (708) and the reproducing engine, additional engines simultaneously decode second type data (2), and the decoded first type data (1) and the decoded second type data (2) are overlaid and reproduced by a blender (711).

48. The reproducing apparatus as claimed in any of claims 40 to 47, further comprising:
a reading unit (502) to read data to be reproduced from the storage medium (501) and provide the data to the storage unit.
